# EUROPEAN PATENT SPECIFICATION

(11) **EP 2 125 627 B1**
(45) Date of publication and mention of the grant of the patent: **27.02.2013**
(21) Application number: 07849525.6
(22) Date of filing: 17.12.2007
(51) Int. Cl.: C02F 1/36, C02F 1/461, C02F 1/467

(54) **A METHOD FOR DECOMPOSING OIL AND OTHER ORGANIC INSOLUBLE AND SEMI-SOLUBLE LIQUIDS IN AN AQUEOUS MEDIUM**
VERFAHREN ZUR ZERSETZUNG VON ÖL UND ANDEREN ORGANISCHEN UNLÖSLICHEN UND HALBLÖSLICHEN FLÜSSIGKEITEN IN EINEM WÄSSRIGEN MEDIUM
PROCÉDÉ POUR DÉCOMPOSER UNE HUILE ET D'AUTRES LIQUIDES INSOLUBLES ET SEMI-SOLUBLES ORGANIQUES DANS UN MILIEU AQUEUX

(30) Priority: 21.12.2006 GB 0625579
(43) Date of publication of application: 02.12.2009
(73) Proprietor: Windsor Scientific Limited, Slough, Berkshire SL1 4HE (GB)
(72) Inventor: HALL, Clive Edward, Ashford, Middlesex TW15 3PQ (GB); DAWES, Keith William, Shurlock Row, Berkshire RG10 0NY (GB)
(74) Representative: Buckley, Guy Julian
(86) International application number: PCT/IB2007/055175
(87) International publication number: WO 2008/078273

(56) References cited:
- EP-A1- 1 731 198
- JP-A- 2005 021 744
- JP-A- 2005 103 351
- WADHAWAN, J. D. ET AL: "Emulsion electrosynthesis in the presence of power ultrasound Biphasic Kolbe coupling processes at platinum and boron-doped diamond electrodes" JOURNAL OF ELECTROANALYTICAL CHEMISTRY, vol. 507, 2001, pages 135-143, XP002477501
- HOLT K B ; DEL CAMPO J ; FOORD J S ; COMPTON R G ; MARKEN F: "Sonoelectrochemistry at platinum and boron-doped diamond electrodes: Achieving 'fast mass transport' for 'slow diffusers'" JOURNAL OF ELECTROANALYTICAL CHEMISTRY, vol. 513, 2001, pages 94-99, XP002477502

## Description

The present invention concerns a method useful for decomposing an insoluble or semi-soluble organic liquid, such as oil, in an aqueous medium. In particular, the present invention concerns the use of a combination of electrochemical oxidation and ultrasound for the decomposition of water-insoluble and semi-soluble organic materials dispersed in an electrically conductive liquid medium into CO₂ and H₂O.

It is known that electrochemical oxidation processes can be utilised to decomposed organic materials in liquid media, whereby an electrochemical reaction generates oxidising species in the media, such as atomic oxygen and hydroxyl radicals, which are able to subsequently oxidise the organic waste species to form water, carbon dioxide and other decomposition products. Previously disclosed processes appear to only work with water-soluble compounds, require the addition of heat, the use of a redox system in the electrolyte and/or are difficult to use in situations where the electrode surfaces become blocked by deposits in the aqueous media or from reaction products formed during the oxidation process.

WO-A-02062709 (Fletcher et al.) discloses an electrochemical oxidation method and-apparatus for treating organic waste whereby said waste matter is added periodically to an acidic aqueous electrolyte containing silver ions as the primary oxidising species. The water-soluble organic waste is decomposed via an oxidation process concurrent with reduction of the primary oxidising species. Anodic re-oxidation of the primary oxidising species is driven by an applied electrical potential between the anode and cathode, allowing further oxidation of the organic waste. Insoluble organic waste is separated from the electrolyte and destroyed by a heat treatment step in which the temperature is raised to at least 518°C for a period of 15 minutes.

WO05028372 (Carson et al.) discloses an electrochemical oxidation apparatus and an electrochemical oxidation process mediated by the addition of at least one redox couple to an electrolyte, wherein the oxidised form of said couple(s) are produced by oxidation at the anode. The oxidised species of said redox couple(s) oxidise the organic waste matter, themselves being converted to their reduced form, whereupon they are reoxidised at the anode surface). Ultrasound may be used to assist the mediated electrochemical oxidation reaction by increasing the contact between the redox species and the organic materials.

JP2005021744 (Kurita Ltd) discloses a method comprising the steps of emulsifying an amount of oil in sea water, to form an emulsion of oil in sea water and subsequently electrochemically decomposing oil in sea water emulsion.

JP2005103351 (Kurita Ltd) discloses an enhanced decomposition of a water soluble organic compound by applying a combination of electrochemical treatment and ultrasonic treatment.

EP1731198 (Ait Co., Ltd) discloses a method of dehalogenating an organic halide by a combination of electrochemical reduction and ultrasonic treatment.

It is the object of the present invention to overcome one or more of the disadvantages associated with the methods described within the prior art and to provide an improved method for the decomposition of water insoluble and semi-soluble organic liquid wastes.

The present invention, in its various aspects, is as set out in the accompanying claims.

In accordance with the present invention, there is provided a method of decomposing an organic liquid, having a solubility in water of 0 or less than 0.5g/l, preferably less than 0.05g/l, at 25°C, the method comprising the following sequential or concurrent steps:
a) emulsifying an amount of the organic liquid in an amount of an electrically conducting aqueous medium to form an emulsion of the organic liquid in an electrically conducting aqueous medium; and
b) electrochemically decomposing the emulsified organic liquid on a surface of an oscillating electrode in an electrochemical cell, wherein the electrode is oscillating at a frequency of at least 5 KHz, preferably at least 15 KHz, more preferably at least 20 KHz. The electrode is preferably oscillated at no more than 100 KHz, more preferably no more than 80 KHz, e.g. no more than 50 KHz,.
wherein the decomposition is an oxidative process in which said organic liquid is decomposed into CO₂ and H₂O.

The electrode is preferably oscillated at an ultrasonic frequency i.e. 15 to 100 KHz. The electrode may be oscillated by means of an ultrasonic transducer which is mechanically or hydrodynamically coupled to the electrode. Preferably, the electrode is oscillated at a frequency of from about 20 KHz to about 80 KHz, such as from about 20 to about 50 KHz.

The oscillating electrode provides an energy density at the surface of the oscillating electrode. This energy density is preferably sufficient to cause cavitation of the emulsified organic liquid. Cavitation at the electrode surface will depend upon the frequency of oscillation and viscosity of the medium in the electrochemical cell. For example, depending upon the particular medium in the electrochemical cell, when the electrode is oscillated at an ultrasonic frequency of 20 KHz, an energy density at the surface of the electrode of above 0.5 Wcm⁻², e.g. up to 1 Wcm⁻² or above, will typically be required to cause cavitation.

The mechanism of decomposition of the organic liquid is oxidative and the liquid contacts the anode of the electrochemical cell.

The aqueous medium is preferably an aqueous salt solution. An example of such a salt is sodium chloride. Salt concentrations in the solution are preferably higher than 0.1 millimolar, more preferably higher than 1 millimolar, even more preferably higher than 0.01 molar, yet more preferably 0.1 molar, e.g. 1 molar.

In one embodiment of the present invention, the organic liquid and aqueous medium may be mixed together in the electrochemical cell and the mixture subjected to high shear conditions to disperse the organic liquid in the aqueous medium. The oscillating electrode provides an energy density at the surface of the oscillating electrode sufficient to emulsify the organic liquid in the aqueous medium e.g. such that steps a) and b) occur concurrently.

In another embodiment of the present invention, the organic liquid and aqueous medium may be emulsified prior to subjecting to it electrochemical decomposition e.g. such that steps a) and b) occur sequentially. In this embodiment, the emulsified organic liquid may also be subjected to mixing conditions in the electrochemical cell. The inventors speculate, though they do not wish to be limited by this, that the oscillating electrode could provide an energy density at the surface of the oscillating electrode sufficient to subject the emulsified organic liquid to continued or enhanced emulsifying conditions.

The method of the present invention may be carried out at room temperature, e.g. 20-25°C, although the process may take place at elevated temperatures e.g. due to heating from use of the apparatus.

Whilst the Applicant does not wish to be bound by theory, it is believed that the decomposition of the organic liquid takes place by the direct contact of the organic liquid with the electrode surface. Accordingly, the method of the present invention does not essentially require the addition of a separate redox couple. Indeed, the method of the present invention preferably occurs in the absence of a redox couple.

The organic liquid may comprise one or more organic compounds which is/are liquid at the temperature of emulsification, or it may contain a plurality of organic compounds in a form which is liquid at the temperature of emulsification e.g. an organic compound, which is per se solid at the temperature of emulsification, dissolved in an organic solvent.

Ultrasonic transducers are capable of producing high frequency sound waves, typically between about 5 to about 100 KHz, although more usually between about 20 to about 80 kHz. When introduced into a liquid, ultrasonic waves can cause the formation, growth and implosive collapse of bubbles within said liquid, a process termed cavitation. During cavitational collapse liquid energy is focused into minute volumes, producing intense local heating, high pressures and rapid heating and cooling rates. The exposure of high powered ultrasound to both the electrode surface or surfaces in the electrochemical cell and to the organic liquid provides sufficient energy to cause emulsification of the substantially insoluble organic liquids in the aqueous medium, allowing efficient mass transport of said organic liquids to the electrode surface, thereby enabling the electrochemical decomposition process to occur efficiently.

Whilst the process of cavitation can be demonstrated to have a beneficial effect on the electrochemical decomposition of organic insoluble and semi-soluble liquids, the process can cause a great deal of vibration resulting in component damage and an overall loss of efficiency within the electrochemical redox system. Unlike other known materials, the inventors have found that diamond electrodes can withstand high power ultrasound without suffering from damage resulting from cavitation. This resilient property of diamond electrodes can allow the application of ultrasound to both the electrode surface and to the surrounding liquid, enabling maximum organic waste emulsification and so increasing the probability of contact between the organic liquid with the electrode surface, without causing cavitation damage to the electrode structure. Diamond per se has poor electrical conductivity properties, but can be modified e.g. by doping with boron, such that the diamond electrode possesses electronic properties similar to that of a semi-metal. Boron doped diamond electrodes may have sufficiently high electrical conductivities that are resilient to cavitational damage when subjected to high powered ultrasonic waves. Diamond electrodes can be used either cathodically or anodically and as such the polarity of each electrode can be periodically reversed in order to clean the electrode surfaces, maintaining the efficiency of the electrochemical decomposition process. Diamond electrodes suitable for use in the present invention are commercially available from e.g. Windsor Scientific Limited, England.

The efficiency of the electrochemical decomposition processes can be reduced by a build up of deposits e.g. from the emulsion or from the reaction products of the electrochemical reaction on the surface of the electrodes. However, the use of the ultrasound tends to reduce the likelihood of build up of such deposits.

The method of the present invention can be utilised at room temperature and lends itself to simple process control and long term, unattended operation. Thus this method is well suited for tasks such as the decomposition of dangerous or contaminated organic chemicals and oil,

The present invention may be carried out in an apparatus comprising an electrochemical cell comprising a diamond electrode, preferably a boron doped electrode, coupled to an ultrasonic transducer for oscillating the diamond electrode at a frequency of at least 20 KHz.

## Claims

1. A method of decomposing an organic liquid, having a solubility in water of 0 or less than 0.5g/l at 25°C, the method comprising the following sequential or concurrent steps:
a) emulsifying an amount of the organic liquid in an amount of an aqueous medium to form an emulsion of the organic liquid in the aqueous medium; and
b) electrochemically decomposing the emulsified organic liquid on a surface of an oscillating electrode in an electrochemical cell, wherein the electrode is oscillating at a frequency of at least 5 KHz,
wherein the decomposition is an oxidative process in which said organic liquid is decomposed into CO₂ and H₂O.

2. A method as claimed in claim 1, wherein the electrode is a diamond electrode, preferably a boron-doped diamond electrode.

3. A method as claimed in any one of the preceding claims, wherein the electrode is oscillated by means of an ultrasonic transducer which is mechanically coupled to the electrode.

4. A method as claimed in any one of claim 1 or claim 2, wherein the electrode is oscillated by means of an ultrasonic transducer which is hydrodynamically coupled to the electrode.

5. A method as claimed in any one of the preceding claims, wherein the electrode is oscillated at a frequency of from about 20 to about 80 KHz, such as from about 20 to about 50 KHz.

6. A method as claimed in any one of the preceding claims, wherein the organic liquid has a solubility in water of 0 or less than 0.05g/l at 25°C.

7. A method as claimed in any one of the preceding claims, wherein the oscillating electrode provides an energy density at the surface of the oscillating electrode sufficient to cause cavitation of the emulsified organic liquid.

8. A method as claimed in any one of the preceding claims, wherein the oscillating electrode provides an energy density at the surface of the oscillating electrode sufficient to emulsify the organic liquid in the aqueous medium, such that steps a) and b) occur concurrently.

9. A method as claimed in any one of claims 1-7, wherein steps a) and b) occur sequentially and wherein the oscillating electrode provides an energy density at the surface of the oscillating electrode sufficient to maintain or enhance emulsifying conditions in the electrochemical cell.

## Patentansprüche

1. Verfahren zum Zersetzen einer organischen Flüssigkeit, die eine Wasserlöslichkeit von 0 oder weniger als 0,5 g/l bei 25 °C aufweist, wobei das Verfahren die folgenden aufeinanderfolgenden oder gleichzeitigen Schritte aufweist:
a) Emulgieren einer Menge der organischen Flüssigkeit in einer Menge von einem wässrigen Medium, um eine Emulsion der organischen Flüssigkeit in dem wässrigen Medium zu bilden; und
b) elektrochemisches Zersetzen der emulgierten organischen Flüssigkeit auf einer Oberfläche einer oszillierenden Elektrode in einer elektrochemischen Zelle, wobei die Elektrode bei einer Frequenz von mindestens 5 kHz oszilliert,
wobei das Zersetzen ein oxidativer Prozess ist, in welchem die organische Flüssigkeit in CO₂ und H₂O zersetzt wird.

2. Verfahren gemäß Anspruch 1, wobei die Elektrode eine Diamantelektrode ist, vorzugsweise eine bordotierte Diamantelektrode.

3. Verfahren gemäß einem der vorhergehenden Ansprüche, wobei die Elektrode mittels eines Ultraschallwandlers oszilliert wird, der mit der Elektrode mechanisch verbunden ist.

4. Verfahren gemäß Anspruch 1 oder 2, wobei die Elektrode mittels eines Ultraschallwandlers oszilliert wird, der mit der Elektrode hydrodynamisch verbunden ist.

5. Verfahren gemäß einem der vorhergehenden Ansprüche, wobei die Elektrode bei einer Frequenz von etwa 20 kHz bis etwa 80 kHz oszilliert wird, beispielsweise von etwa 20 kHz bis etwa 50 kHz.

6. Verfahren gemäß einem der vorhergehenden Ansprüche, wobei die organische Flüssigkeit eine Wasserlöslichkeit von 0 oder weniger als 0,05 g/l bei 25 °C aufweist.

7. Verfahren gemäß einem der vorhergehenden Ansprüche, wobei die oszillierende Elektrode eine Energiedichte an der Oberfläche der oszillierenden Elektrode bereitstellt, die dazu ausreichend ist, Kavitation der emulgierten organischen Flüssigkeit zu bewirken.

8. Verfahren gemäß einem der vorhergehenden Ansprüche, wobei die oszillierende Elektrode eine Energiedichte an der Oberfläche der oszillierenden Elektrode bereitstellt, die dazu ausreichend ist, die organische Flüssigkeit in dem wässrigen Medium zu emulgieren, so dass die Schritte a) und b) gleichzeitig stattfinden.

9. Verfahren gemäß einem der Ansprüche 1 bis 7, wobei die Schritte a) und b) aufeinanderfolgend stattfinden und wobei die oszillierende Elektrode eine Energiedichte an der Oberfläche der oszillierenden Elektrode bereitstellt, die dazu ausreichend ist, in der elektrochemischen Zelle Emulgierbedingungen aufrecht zu erhalten oder zu verbessern.

## Revendications

1. Procédé de décomposition d'un liquide organique ayant une solubilité dans l'eau égale à 0 ou inférieure à 0,5g/l à 25°C, le procédé comprenant les étapes séquentielles ou concurrentes suivantes:
a) l'émulsification d'une quantité du liquide organique dans une quantité d'un milieu aqueux afin de former une émulsion du liquide organique dans le milieu aqueux et
b) la décomposition électrochimique du liquide organique émulsifié sur une surface d'une électrode oscillante dans une cellule électrochimique, l'électrode oscillant à une fréquence de 5 KHz au moins,
dans lequel la décomposition est un processus oxydatif au cours duquel ledit liquide organique est décomposé en CO₂ et H₂O.

2. Procédé suivant la revendication 1, dans lequel l'électrode est une électrode de diamant, de préférence une électrode de diamant dopée au bore.

3. Procédé suivant une quelconque des revendications précédentes, dans lequel l'électrode est amenée à osciller au moyen d'un transducteur ultrasonique qui est couplé mécaniquement à l'électrode.

4. Procédé suivant une quelconque des revendications 1 ou 2, dans lequel l'électrode est amenée à osciller au moyen d'un transducteur ultrasonique qui est couplé hydrodynamiquement à l'électrode.

5. Procédé suivant une quelconque des revendications précédentes, dans lequel l'électrode est amenée à osciller à une fréquence de 20 KHz environ à 80 KHz environ, par exemple à une fréquence de 20 à 50 KHz environ.

6. Procédé suivant une quelconque des revendications précédentes, dans lequel le liquide organique a une solubilité dans l'eau égale à 0 ou inférieure à 0,05g/l à 25°C.

7. Procédé suivant une quelconque des revendications précédentes, dans lequel la surface de l'électrode oscillante dégage une densité d'énergie suffisante pour provoquer une cavitation du liquide organique émulsifié.

8. Procédé suivant une quelconque des revendications précédentes, dans lequel la surface de l'électrode oscillante dégage une densité d'énergie suffisante pour émulsifier le liquide organique dans le milieu aqueux, de façon que les étapes a) et b) se déroulent de façon concurrente.

9. Procédé suivant une quelconque des revendications 1 à 7, dans lequel les étapes a) et b) se déroulent séquentiellement et dans lequel la surface de l'électrode oscillante dégage une densité d'énergie suffisante pour maintenir ou améliorer les conditions d'émulsification dans la cellule électrochimique.
